# EUROPEAN PATENT APPLICATION

(11) **EP 1 338 582 A2**
(43) Date of publication of application: **27.08.2003**
(21) Application number: 03251152.9
(22) Date of filing: 26.02.2003
(51) Int. Cl.: C04B 35/78, C04B 35/628, B23B 27/14

(54) **Elongated ultra hard particle reinforced ultra hard materials and ceramics, tools and parts incorporating the same, and method of making the same**

(30) Priority: 26.02.2002 US 359773 P
(71) Applicant: SMITH INTERNATIONAL, INC. (a Delaware corp.), Houston, Texas 77032 (US)
(72) Inventor: Middlemiss, Stewart, Salt Lake Utah 84124 (US)
(74) Representative: W.P. Thompson & Co.

(57) **Abstract**

Ultra hard materials and ceramics reinforced with elongate ultra hard material particles and methods of forming the same are provided. These materials have improved thoughness and damage tolerance and can be used on, or to form tools such as cutting tools and various work pieces and parts.

## Description

### BACKGROUND OF THE INVENTION

This invention relates to wear and impact resistant materials, i.e., more damage tolerant materials having improved toughness, used in work pieces, parts, machining tools, cutting tools, abrasives, wire dies, wear parts, and the like and to a method of making the same. Specifically, it relates to impact resistant and damage tolerant materials, and to a method of making such materials, having elongate particles or grains, or fibers of ultra hard material (diamond or cubic boron nitride) permeating the structure of sintered polycrystalline diamond (PCD),polycrystalline cubic boron nitride (PcBN) and other ultra hard polycrystalline bodies, or multi phase ceramics such as carbides, nitrides and oxides of the more common transition and Group I, II, III & IV metals such as Sc, Ti, V, Cr, Mn, Fe, Co, Ni, Cu, Zn, Y, Zr, Nb, Mo, Hf; Ta, W, Be, Mg, Ca, Sr, Al, Si, B, Li, Na, and K and boron carbide and boron oxides The terms "fiber" used herein refers to strands of material approximately cylindrical in shape, and having a length considerably longer than their diameter. The present invention also relates to work pieces, parts, cutting tools, machining tool, wire dies, wear parts incorporating such improved toughness and damage tolerant materials.

The creation of ultra hard, wear resistant materials with diamond and cubic boron nitride crystals is known. These materials are often used in machining tools, cutting tools, abrasives, wire dies, wear parts, and the like. One example, is the use of PCD or PcBN to form the cutting layer of a cutting element used in an earth boring bit such as a drag bit.

Because polycrystalline composites of diamond or cBN have advantages over single crystals of diamond or cBN, techniques have been developed to bind together large numbers of small crystals into polycrystalline composites of useful size, commonly known as "compacts". The diamond and cBN particles used as starting material can be either natural or manufactured using known high pressure techniques. The basic processes for creating polycrystalline compacts of both diamond and cBN are similar.

Polycrystalline diamond is created by mixing a large number of relatively small diamond crystals together, and subjecting them to high pressure and high temperature (HPHT) so that intercrystalline bonding occurs. A mixture of diamond crystals and graphite can also be used. Generally, a catalyst or binder material is added to assist intercrystalline bonding. This process is known as "sintering". Metals such as cobalt, iron, nickel, manganese, and the like, and alloys of these metals have been used as a catalyst matrix. Various other materials have been added to the diamond crystals prior to sintering to improve the usefulness of polycrystalline diamond in machine tools, tungsten carbide being one example.

Polycrystalline boron nitride is also made by sintering in the presence of binder and catalyst materials. As with polycrystalline diamond, a mixture of cBN and hexagonal boron nitride (hBN, similar in structure to graphite) can be used. Although polycrystalline cBN compacts can be formed without catalyst materials, boron and nitrogen oxides which form on the outside of the individual cBN grains make it difficult to do so. Many different materials have been used as catalysts and binders to assist the formation of cBN intercrystalline bonds. As with diamond, metals and their alloys can be used. Other well known methods for forming polycrystalline diamond, or polycrystalline cubic boron nitride include chemical vapor deposition.

PCD or PcBN compacts are susceptible to gross chipping and spalling once a crack initiates in such compacts. These materials have no mechanism for preventing catastrophic crack propagation in the material. In general, ultra hard polycrystalline bodies and multi-phase ceramics are susceptible to catastrophic crack growth upon the initiation of a crack. As such ultra hard polycrystalline materials and multi-phase ceramics are desired having improved toughness and resistance to crack growth, and thus, improved damage tolerance.

### SUMMARY OF THE INVENTION

Elongate ultra hard material particle reinforced ultra hard materials and ceramics and a method of forming the same are provided. These materials can be used in forming work pieces, parts, machining tools, cutting tools, abrasives, wire dies, wear parts and the like. In an exemplary embodiment an ultra hard material or ceramic material having at least about 5% by volume elongate ultra hard material particles having an aspect ratio of at least about2:1 is provided. In a further exemplary embodiment, the elongate ultra hard material particles have an aspect ratio of at least about 2.5:1. In an exemplary embodiment, the elongate ultra hard material particles may be diamond, cBN, Lonsdaleite or wBN. An "aspect ratio" is the ratio of the length to the width of the particle.

In a further exemplary embodiment, a tool is provided having a substrate and an ultra hard material layer over the substrate wherein the ultra hard material layer has at least about 5% by volume elongate ultra hard material particles having an aspect ratio of at least about 2:1. In yet a further exemplary embodiment a bit is provided having a body, and a cutting element mounted on the body. The mounted cutting element has a substrate and an ultra hard material layer over the substrate wherein the ultra hard material layer has at least about 5% by volume elongate ultra hard material particles having an aspect ratio of at least about 2:1.

In another exemplary embodiment a method of forming toughened ultra hard materials and ceramic materials is provided. The method requires providing ultra hard material particles or ceramic particles, and combining elongate ultra hard material particles having an aspect ratio of at least about 2:1 with the ultra hard material or ceramic particles. The combined particles are sintered to form the toughened material.

In yet another exemplary embodiment, a method of forming a tool is provided. The method requires providing a substrate material, and providing ultra hard material particles over the substrate, the particles having at least about 5% by weight of elongate ultra hard material particles having an aspect ratio of at least about 2:1. The method further requires processing the ultra hard material and substrate material forming a tool having a body of substrate and a polycrystalline ultra hard material layer.

In a further exemplary embodiment, a method of tailoring the toughness of an ultra hard material or a ceramic material is provided, The method requires forming a layer of material using ultra hard material particles or ceramic particles, such that a plurality of the particles are elongate particles having an aspect ratio of at least about 2:1 The method further requires orienting the elongate particles along a predetermined orientation.

### BRIEF DESCRIPTION OF THE DRAWINGS

FIG. 1 is a perspective view of an exemplary embodiment cutting element having an improved toughness cutting layer.
FIG. 2 is a perspective view of an exemplary embodiment bit body incorporating exemplary embodiment cutting elements.

### DESCRIPTION OF EXEMPLARY EMBODIMENTS OF THE INVENTION

To improve toughness and resistance to crack growth, in an exemplary embodiment of the present invention, ultra hard polycrystalline materials reinforced with elongate particles (or grains), or fibers (or strands) of diamond or cBN or their hexagonal forms of Lonsdaleite or Wurzitic Boron Nitride (wBN), are provided. In another exemplary embodiment multi-phase ceramics such as for example, Al₂O₃, Si₃N₄, SiC, ZrO₂, MgO, TiCN, B₄C, MgAl₂O₄, and ZrSiO₄, borides, carbides, nitrides and oxides of the more common transition and Group I, II, III & IV metals such as Sc, Ti, V, Cr. Mn_{,} Fe, Co, Ni, Cu, Zn, Y, Zr, Nb, Mo, Hf, Ta, W, Be, Mg, Ca, Sr, Al, Si, B, Li, Na, and K and boron carbide and boron oxides are reinforced with elongate particles of diamond or cBN or their hexagonal form Lonsdaleite or wBN. In addition, the elongate particles or fibers may be coated with one or more layers of silicon nitride, silicon oxide, silicon glass, titanium carbide, titanium nitride, tungsten, titanium carbonitride aluminum oxide layer or other ceramic or metal layer to tailor the particle/ matrix interfacial strength of the toughened material to a desired strength.

A certain fraction of elongate diamond or cBN grains occur during the HPHT manufacture of diamond or cBN powder, respectively and can be sorted from other more regular shapes, using for example a shape sorting table. Applicant has discovered that about 2% of total particles in such powder are elongate, i.e., have an aspect ratio of at least about2:1.

A sorting table has a generally planar surface that is inclined along two planes. The surface vibrates at a preselected frequency causing every different shape of particle to travel along a different trajectory on the surface. For example, round particles tend to roll the shortest distance. The elongate particles tend to roll end over end and travel a longer distance. By placing different bins at the different locations along the end of the surface to where the different shapes of particles travel, the different shapes of particles which are separated can be captured.

In another exemplary embodiment, PCD or PcBN components may be crushed and their metal catalyst removed using agents such as acids leaving diamond or cBN particles. Alternatively elongate grains can be formed in a chemical vapor deposition (CVD) process when a diamond or cBN coating or layer is applied to a substrate. CVD applied coatings have elongate grains that are generally perpendicular to the surface of the coating. The coating is removed from the substrate and crushed. The elongate diamond or cBN particles of the coating are then separated from the more regular shaped particles by using a sorting table, for example.

The elongate ultra hard material particles may be in hexagonal form as for example, they may be Lonsdaleite which is the hexagonal form of diamond or wBN which the hexagonal form of cBN. The hexagonal form of diamond, i.e., Lonsdaleite occurs by processing the diamond in an explosive diamond process subjecting the diamond to a much higher pressure and a lower temperature than the pressure and temperature, respectively, used in high pressure, high temperature (HPHT) process used to form PCD. The pressure used in forming Lonsdaleite is typically about 4 to 10 times that used in forming PCD, while the temperature is about 60% of the temperature used in forming PCD. DuPONT is known to have commercially manufactured Lonsdaleite. The pressure for forming wBN is typically lower than the pressure used to form Lonsdaleite.

In an exemplary embodiment, the elongate ultra hard material particles should make up a weight of at least 5% of the total weight ofthe material particles used to form the ultra hard material or the multi phase ceramic. After sintering, in an exemplary embodiment, the elongate ultra hard material particles should make up at least 5% of the volume of the ultra hard material. Moreover, in an exemplary embodiment, the elongate particles should have an aspect ratio of at least 2:1. Applicant believes that incorporating about 5% or more by weight elongate particles having an aspect ratio of at least about 2:1 will provide for an increase in toughness and resistance to crack growth, and thus an increase in damage tolerance in the sintered material. In another exemplary embodiment, the elongate ultra hard material particles should have an aspect ratio of at least 2.5:1.

Currently, there is no manufacturing process for the manufacture of long diamond or cBN fibers. However, if diamond or cBN fibers were to become available it is believed that such fibers may be used instead of the elongate ultra hard material particles, to improve material toughness and resistance to crack growth, and thus, damage tolerance, in ultra hard materials and ceramics. It is believed that fibers having an aspect ratio of at least about 2:1, and more preferably of at least about 2 5:1 and making up at least about 5% of the weight of the material particles before sintering provide for improvement in the sintered material toughness and resistance to crack growth, and thus, damage tolerance. Alternatively both ultra hard material elongate particles and fibers may be used for reinforcing polycrystalline ultra hard material and/or ceramics.

A method for forming PcBN, or PCD or ceramic tools, work pieces, parts or compacts of the present invention includes the steps of mixing boron nitride, diamond or ceramic powders, respectively, with the elongate ultra hard material particles or fibers and with a catalyst, and subjecting the mixture to sintering at elevated pressure and temperature conditions, i.e., an HPHT process, where the cubic boron nitride or diamond is thermodynamically stable. If a ceramic compact is being formed sintering of the ceramic may also be performed in the absence of pressure. In such case, the sintering temperature must be selected so as to not cause conversion ofthe diamond into graphite or the cBN to hBN.

For convenience, the phrases "elongate ultra hard material particles" or "elongate ultra hard material grains" will be used herein to refer to elongate ultra hard material particles, and/or elongate ultra hard material grains and/or elongate ultra hard material fibers. When used in a cutting tool, the elongate particles may be oriented in any desired direction, e.g., normal or not normal to the tool rake face, or may even be randomly oriented relative to the tool rake face- Orientation of the elongate particles may be accomplished using known methods.

The orientation of the elongate particles can be tailored in accordance with the expected crack growth direction which in many instances is a function of stress orientation. For example, the elongate particles may be oriented transverse to the expected crack growth direction so as to retard such crack growth. The elongate ultra hard material particles may also for example be continuously oriented ultra hard material fibers, or short elongate particles or fibers arranged in a desired orientation or in a random orientation. These elongate particles form a reinforcing phase enhancing the elastic stiffness properties of the polycrystalline ultra hard material or ceramic that they reinforce and also make such material tougher through the interaction of the reinforcing phase with cracks formed in such polycrystalline ultra hard material or ceramic material by causing crack deflection and/or bridging across the crack. Consequently, such polycrystalline material or ceramic material is very damage tolerant.

The elongate ultra hard material particles may be coated with one or more of materials such as silicon nitride, silicon oxide, silicon glass, titanium carbide, titanium nitride, tungsten, titanium carbon nitride, aluminum oxide or other ceramic or metal layer. For example, an aluminum oxide coating may be desirable when reinforcing PCD with the ultra hard material elongate particles. This coating can be created via CVD which a well known technique for depositing a film of materials onto a surface.

These coatings can be used to control the bonding between the elongate particles and the crystals in the polycrystalline materials or the ceramics. For example; a coating providing a strong bond is desirable for increasing the strength of the material. However, a coating providing for a weaker bond, as for example aluminum oxide, is desirable when a further improvement in toughness is desired. A weaker bond between the elongate particles and the other particles will cause a crack reaching the interface between an elongate particle generally transverse to the crack growth and the other particles (e. g., the matrix) to travel a longer distance around the particle thus slowing down the rate of crack growth.

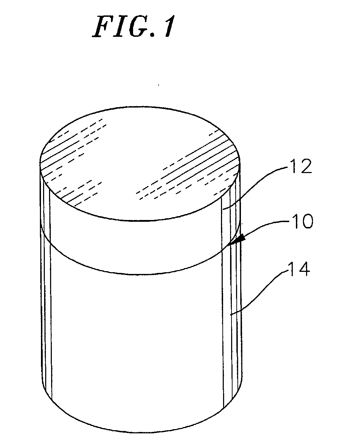

In one exemplary embodiment, a cutting tool or cutting element such as a shear cutter 10 with an improved toughness ultra hard material cutting layer 12 such as PCD or PcBN layer is provided, as for example shown in FIG. 1. The shear cutter has a substrate or body 14 over which is formed the ultra hard material layer. In an exemplary embodiment one or more transition layers may be interposed between the substrate and the ultra hard material layer.

According to an exemplary embodiment method of the present invention used to form a cutting element shown in FIG. 1, a substrate material is provided in powder form and is placed in can. The can is typically formed of niobium, but other materials may be used in other exemplary embodiments. The substrate may also be a pre-formed solid. In addition to the aforementioned substrate embodiments, a combination solid/powder substrate may be utilized where appropriate, Ultra hard material particles are provided over the substrate material to form the ultra hard material cutting layer. At least about 5% by weight ofthe particles should elongate particles having an aspect ratio of at least about2:1. The elongate particles may be mixed in with regular particles. The ultra hard material particles including elongate particles may be in the form of a pre-formed sheet that incorporates a binder material. In powder form the ultra hard material layer may also include a binder material. The can with substrate and ultra hard material is placed in a high pressure press where it is exposed to an HPHT process sufficient to convert the layer of ultra hard particles to a layer of polycrystalline ultra hard material, and to metallurgically join the polycrystalline ultra hard material to the solid substrate during the same operation. The binder material preferably forms what is often described as a binder matrix within the polycrystalline ultra hard material. In this embodiment, the solid substrate may take on various shapes and may be formed of various materials.

If the substrate is provided in powder form, the HPHT process will cause the substrate material to solidify, the ultra hard particles to be converted to a layer of polycrystalline ultra hard material layer, and the polycrystalline ultra hard material layer to be bonded to the solid substrate.

According to either of the aforementioned exemplary embodiments, one or more optional intermediate layers may be formed by providing intermediate layer material over the substrate material prior to the application of the ultra hard material. The intermediate, or transition, layer(s) between the substrate and the polycrystalline ultra hard material layer have properties intermediate to the substrate and the polycrystalline ultra hard material layer. Similar procedures may be used to form other types of cutting elements.

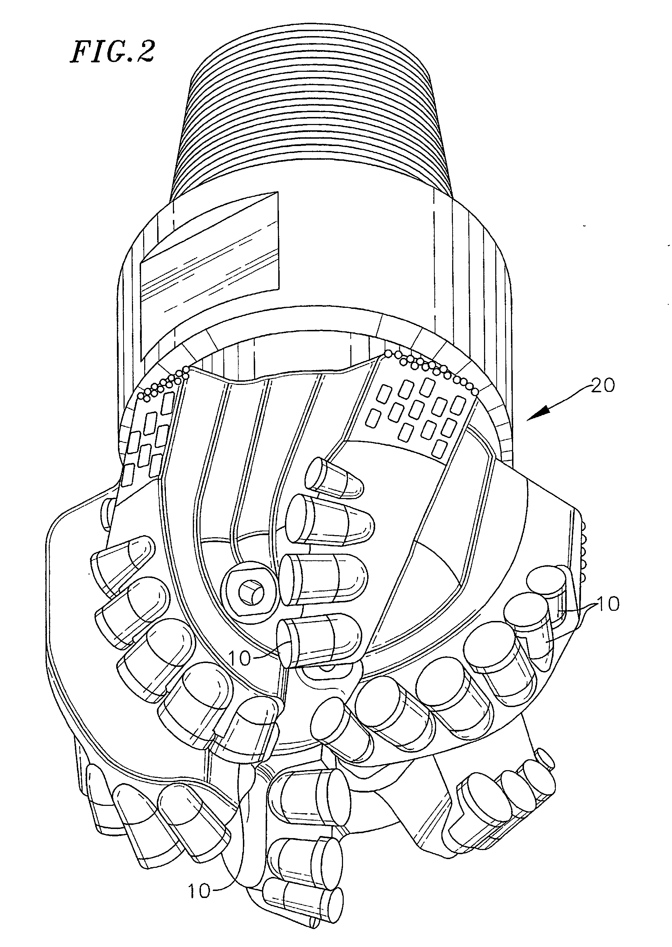

In one illustrative embodiment, the cutting elements 10 of the present invention are mounted in exemplary drag bit 20 as shown in FIG. 2. This arrangement is intended to be exemplary only and cutting elements 10 may be used in various other arrangements in other embodiments. It should be understood, that a shear cutter and method of forming the same have been described herein for illustrative the purposes, and such descriptions should not be construed to limit the present invention only to such embodiments.

By reinforcing ultra hard materials and ceramics with ultra hard material elongate particles in accordance with the present invention, the reinforced materials become more robust and damage tolerant, allowing for use in applications that require high levels of damage tolerance. For example, the new reinforced ceramics may be used to form parts such as turbine blades for aircraft jet engines or other engine parts. Such parts will be able to operate in much higher temperatures than their counterpart metallic parts. In other words, ceramic materials according to the present invention may be used in application for which they could not be used for before due to their low damage tolerance. In this regard, the high temperature characteristics of the ceramics can be exploited.

The preceding merely illustrates the principles of the invention. It will thus be appreciated that those skilled in the art will be able to devise various arrangements which, although not explicitly described or shown herein, embody the principles of the invention and are included within its scope and spirit. Furthermore, all examples and conditional language recited herein are principally intended expressly to be only for pedagogical purposes and to aid in understanding the principles of the invention and the concepts contributed by the inventors to furthering the art, and are to be construed as being without limitation to such specifically recited examples and conditions Moreover, all statements herein reciting principles, aspects, and embodiments of the invention, as well as specific examples thereof, are intended to encompass both structural and the functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary embodiments shown and described herein Rather, the scope and spirit of the present invention is embodied by the appended claims.

## Claims

1. A material selected from the group consisting of ultra hard materials and ceramic materials comprising at least about 5% by volume elongate ultra hard material particles having an aspect ratio of at least about 2:1.

2. A material as claimed in claim 1, wherein the elongate ultra hard material particles have an aspect ratio of at least about 2.5:1.

3. A material as claimed in claim 1 or 2, wherein the elongate ultra hard material particles are selected from the group of particles consisting of diamond, cBN, Lonsdaleite and wBN.

4. A material as claimed in any one of the preceding claims, comprising a material selected from the group consisting essentially of polycrystalline ultra hard material and multi-phase ceramic materials.

5. A material as claimed in any one of the preceding claims, wherein the elongated ultra hard material particles are oriented in a predetermined direction.

6. A method of forming toughened ultra hard materials and ceramic materials comprising:
providing material particles selected from the group of particles consisting of ultra hard material particles and ceramic particles;
combining elongate ultra hard material particles having an aspect ratio of at least about 2:1 with the material particles, wherein at least about 5% of the combined material particles are elongate ultra hard material particles; and
sintering the combined particles to form a toughened material.

7. A method as claimed in claim 6 wherein the toughened material is a material selected from the group consisting of ultra hard polycrystalline materials and multi-phase ceramic materials.

8. A method as claimed in claim 6 or 7, wherein the elongate ultra hard material particles have an aspect ratio of at least about 2:5:1.

9. A method as claimed in any one of claims 6 to 8, further comprising orienting the elongate particles along a desired orientation.

10. A method as claimed in any one of claims 6 to 9, wherein the elongate particles are selected from the group consisting of diamond, cubic boron nitride, Lonsdaleite and wBN.

11. A method as claimed in any one of claims 6 to 10, further comprising coating the elongate particles with a material selected from the group of materials consisting of silicon nitride, silicon oxide, silicon glass, titanium carbide, titanium nitride, tungsten, titanium carbon nitride, and aluminum oxide.

12. A method as claimed in any one of claims 6 to 10, further comprising coating the elongate particles with a material selected from the group of ceramics and metals.

13. A method as claimed in any one of claims 6 to 12, wherein providing elongate ultra hard material particles comprises providing elongate ultra hard material particles having an aspect ratio of at least about 2.5:1.

14. An ultra hard material comprising elongate ultra hard material particles having an aspect ratio of at least about 2:1.

15. A ceramic material comprising elongate ultra hard material particles having an aspect ratio of at least about 2:1.

16. A ceramic material comprising elongate ultra hard material particles having an aspect ratio of at least about 2.5:1.
